Europäisches Patentamt

European Patent Office

Office européen des brevets

(11) Numéro de publication : **0 278 799 B1**

# FASCICULE DE BREVET EUROPEEN

(45) Date de publication du fascicule du brevet :
**02.01.92 Bulletin 92/01**

(51) Int. Cl.⁵ : **G21C 3/12,** G21C 5/06

(21) Numéro de dépôt : **88400055.5**

(22) Date de dépôt : **12.01.88**

(54) **Coeur d'un réacteur nucléaire et procédé de chargement de ce coeur.**

(30) Priorité : **21.01.87 FR 8700683**

(43) Date de publication de la demande :
**17.08.88 Bulletin 88/33**

(45) Mention de la délivrance du brevet :
**02.01.92 Bulletin 92/01**

(84) Etats contractants désignés :
**BE DE GB IT**

(56) Documents cités :
**FR-A- 1 570 497**
**FR-A- 2 152 581**
**FR-A- 2 316 703**

(73) Titulaire : **FRAMATOME**
**Tour Fiat 1, Place de la Coupole**
**F-92400 Courbevoie (FR)**

(72) Inventeur : **Berte, Michel**
**12, rue Martin Basse**
**F-69300 Caluire (FR)**
Inventeur : **Francillon, Eric**
**6 Allée Marcel Achard**
**F-69100 Villeurbanne (FR)**
Inventeur : **Chiarelli, Gérard**
**5, rue Jules Verne**
**F-69330 Jonage (FR)**

(74) Mandataire : **Bouget, Lucien et al**
**Cabinet Lavoix 2, Place d'Estienne d'Orves**
**F-75441 Paris Cédex 09 (FR)**

EP 0 278 799 B1

## Description

L'invention concerne un coeur d'un réacteur nucléaire et un procédé de chargement de ce coeur.

Un coeur d'un réacteur nucléaire tel qu'un réacteur nucléaire à neutrons rapides refroidi par du métal liquide comporte des assemblages amovibles disposés verticalement et maintenus en position grâce à un support ou sommier dans lequel sont engagées les parties inférieures ou pieds des assemblages du coeur, à l'intérieur de fourreaux à axe vertical disposés suivant un réseau correspondant au réseau des assemblages dans le coeur. Les fourreaux verticaux appelés chandelles joignent la partie supérieure à la partie inférieure du sommier qui est réalisé sous forme d'une structure creuse dans laquelle est injecté le fluide de refroidissement du réacteur qui est généralement constitué par du sodium liquide. Chacune des chandelles comporte des ouvertures pour le passage du sodium liquide, des ouvertures correspondantes dans le pied de l'assemblage étant placées en coïncidence avec les ouvertures de la chandelle. Le sodium liquide peut ainsi traverser les assemblages de bas en haut pour assurer leur refroidissement.

Les assemblages combustibles comportent au-dessus de leur pied de forme généralement cylindrique qui est engagé dans le fourreau, une partie prismatique généralement à section hexagonale terminée à sa partie supérieure par une tête permettant la préhension de l'assemblage pour sa manutention et assurant éventuellement la protection neutronique supérieure de l'assemblage.

Les assemblages constituant le coeur d'un réacteur à neutrons rapides sont de plusieurs types différents et ont une position dans le coeur bien déterminée. Certains de ces assemblages sont des assemblages combustibles dans lesquels se dégage la puissance du coeur, d'autres des assemblages fertiles susceptibles d'assurer une certaine régénération du combustible nucléaire, d'autres enfin des assemblages absorbants de divers types permettant de régler la puissance ou d'effectuer les arrêts d'urgence du réacteur.

Lors d'un premier chargement du coeur du réacteur, il est nécessaire non seulement de placer chacun des assemblages dans une position définie dans le coeur, mais encore d'orienter correctement et de façon précise les assemblages les uns par rapport aux autres, à cause de leur forme prismatique, les sections hexagonales de ces assemblages s'imbriquant pour constituer la section transversale du coeur. Il est également nécessaire de placer en même temps les ouvertures ménagées dans le pied de l'assemblage en coïncidence avec les lumières prévues dans les chandelles du sommier pour obtenir des conditions satisfaisantes de circulation du fluide de refroidissement à son entrée dans le coeur.

Dans les conceptions actuelles des coeurs de réacteur nucléaire à neutrons rapides, les pieds des assemblages sont libres en rotation autour de l'axe de la chandelle, toutes les sections correspondantes venant en appui l'une sur l'autre, du pied et de la chandelle, étant circulaires. Au moment de leur mise en place dans le coeur, les assemblages sont suspendus au grappin d'une machine de manutention de façon à être pratiquement libres en rotation autour de leur axe vertical. La seule limite au déplacement en rotation de l'assemblage est apportée par le frottement des pièces en appui pour la suspension de l'assemblage au grappin, sous l'effet du poids de l'assemblage.

Pour assurer une orientation correcte des assemblages les uns par rapport aux autres, on prévoit tout autour de l'assemblage, dans la partie de raccordement du pied avec le corps hexagonal, des surfaces de contact ayant la forme de cames ou de patins destinées à coopérer avec des surfaces de contact de forme correspondante sur les assemblages voisins.

Dans le document FR-A-2316703 la mise en place de l'assemblage 1 dans la chandelle 9, par l'intermédiaire des pièces cylindriques 32 et conique 33 s'accompagne d'un centrage du pied de l'assemblage sans que le positionnement angulaire de l'assemblage soit fixé.

La constitution du réseau d'assemblages correspondant au premier coeur introduit dans un réacteur neuf est obtenue par une suite d'opérations visant à réaliser une orientation relative parfaite des assemblages du réseau, les uns par rapport aux autres.

Avant le remplissage de la cuve avec le sodium liquide, on constitue un réseau complet avec de faux assemblages ayant la même géométrie que les vrais assemblages. Chaque faux assemblage est mis en place manuellement, puis un contrôle visuel in situ permet de vérifier que les ouvertures de passage de sodium dans le pied de l'assemblage sont parfaitement en coïncidence avec les lumières correspondantes de la chandelle. Cette mise en place et cette vérification peuvent être faites facilement, puisque la cuve du réacteur dans laquelle on constitue le coeur est alors sous une atmosphère normale d'air.

Lorsque tous les faux assemblages ont été mis en place, on dispose d'un réseau complet qui sert de référence pour toutes les autres opérations de manutention qui peuvent être effectuées sur les assemblages et en particulier pour le chargement du premier coeur, après remplissage de la cuve par du sodium liquide. On effectue le remplacement des faux assemblages par des vrais, par substitutions successives, chaque assemblage prenant la place d'un faux assemblage présentant exactement la même géométrie et en particulier des surfaces de contact et d'orientation identiques.

Lors de l'introduction d'un assemblage dans un alvéole constitué de six assemblages voisins, on peut corriger un faible décalage angulaire de cet assemblage par coopération des surfaces d'orientation correspondantes. On n'élimine cependant pas complètement le risque d'un décalage angulaire progressif des assemblages les uns par rapport aux autres. Un tel décalage progressif peut conduire à une difficulté d'introduction d'un assemblage ou à un désalignement important entre les lumières des chandelles et les ouvertures du pied de l'assemblage. Dans ce cas, le passage du sodium liquide de refroidissement dans l'assemblage peut être perturbé de façon importante.

Lors du chargement par substitution progressive des assemblages de la première charge aux faux assemblages, la position de chacun des assemblages dans le coeur est repérée de façon précise, à l'aide des moyens habituels de manutention primaire du réacteur.

Les opérations de chargement d'un réacteur nucléaire à neutrons rapides sont donc longues et difficiles à réaliser et l'adaptation des assemblages nécessite la réalisation de patins d'orientation dont les profils sont très complexes.

En outre, les patins d'auto-orientation ne remplissent pas toujours leur fonction, en particulier lorsque les assemblages sont déformés, après un certain temps d'irradiation dans le réacteur.

Des difficultés sont également liées à la conception de la tête de préhension de l'assemblage et de sa liaison avec l'enveloppe hexagonale constituant le corps de l'assemblage.

Même dans le cas où elles n'assurent pas la protection neutronique supérieure de l'assemblage, ces têtes de préhension sont massives et leur conception est délicate, compte tenu des perturbations thermiques importantes qui règnent dans la partie supérieure des assemblages.

Le but de l'invention est donc de proposer un coeur d'un réacteur nucléaire constitué par des assemblages amovibles disposés verticalement et un support ou sommier recevant la partie inférieure ou pied des assemblages, à l'intérieur de fourreaux à axe vertical ou chandelles, percées d'ouvertures de passage du fluide de refroidissement du réacteur placées en coïncidence avec des ouvertures ménagées dans le pied de l'assemblage, ce coeur comportant des assemblages pouvant être mis en place, avec une parfaite orientation autour de leur axe vertical, par rapport au sommier et par rapport aux assemblages voisins, par des opérations simples.

Dans ce but, chacune des chandelles comporte sur son pied au moins un moyen d'orientation de l'assemblage autour de l'axe de la chandelle et chacun des assemblages comporte :

— un corps vertical ayant une partie supérieure constituée par une enveloppe tubulaire ouverte à son extrémité supérieure dont la paroi latérale présente des ouvertures traversantes, placées de manière que le corps vertical de l'assemblage soit disposé dans une orientation parfaitement déterminée autour de son axe vertical en-dessous d'un dispositif de manutention ayant des doigts de préhension engagés dans lesdites ouvertures,

— et une partie inférieure ayant au moins un moyen d'orientation sur son pied, destiné à coopérer avec le moyen correspondant de la chandelle dans laquelle le pied de l'assemblage est introduit, dans une orientation déterminée par le moyen de manutention.

L'invention est également relative à un procédé simplifié de chargement d'un coeur de réacteur nucléaire.

La figure 1 est une vue en élévation et en coupe partielle d'un assemblage combustible d'un coeur suivant l'art antérieur en position dans la chandelle correspondante du sommier.

La figure 2 est une vue partielle en plan du coeur d'un réacteur nucléaire à neutrons rapides.

La figure 3 est une vue en élévation et en coupe partielle d'une partie du coeur d'un réacteur à neutrons rapides suivant l'invention comportant un assemblage combustible en position relevée et un assemblage combustible en position insérée dans le sommier.

La figure 4 est une vue en élévation avec coupe partielle d'un assemblage combustible d'un coeur suivant l'invention.

La figure 5 est une vue en élévation et en coupe d'un assemblage de commande d'un coeur de réacteur nucléaire à neutrons rapides suivant l'invention.

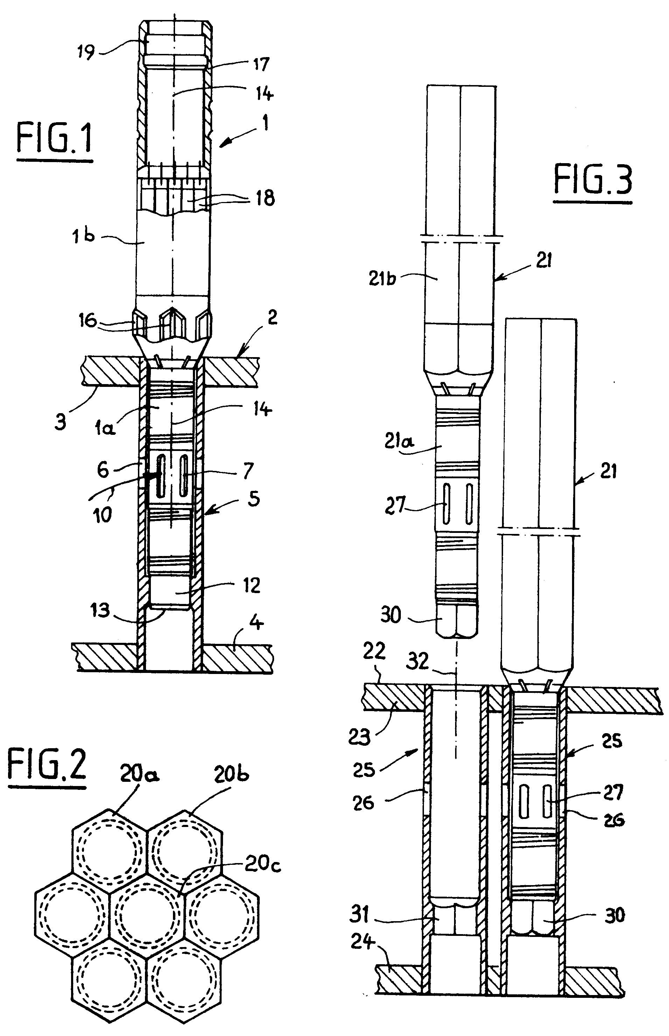

Sur la figure 1, on voit un assemblage combustible 1 en position de service dans le support 2 d'un coeur de réacteur nucléaire suivant l'art antérieur. Le support 2 ou sommier comporte une plaque supérieure horizontale 3, une plaque inférieure également horizontale 4 et un ensemble de fourreaux tubulaires à axe vertical tel que 5, appelés chandelles. Les chandelles 5 joignent la partie supérieure et la partie inférieure du sommier qui comporte un espace libre entre sa plaque supérieure 3 et sa plaque inférieure 4. Du sodium liquide de refroidissement du coeur est injecté par les pompes primaires du réacteur nucléaire, à l'intérieur de cet espace intérieur du sommier 2. Chacune des chandelles 5 comporte un alésage intérieur d'une forme lui permettant de recevoir la partie inférieure 1a ou pied d'un assemblage 1. Les chandelles comportent des lumières 6 traversant leur paroi latérale en face d'ouvertures correspondantes 7 ménagées dans le pied des assemblages. Du sodium liquide de refroidissement peut ainsi pénétrer dans le pied de l'assemblage et circuler dans la direction verticale, de bas en haut, à l'intérieur de cet assemblage, pour assurer son refroidissement (flèches 10). La partie inférieure 12 du pied de l'assemblage de forme cylindrique à section circulaire est engagée dans une partie correspondante 13 de l'alésage intérieur de la chandelle 5. L'assemblage 1 est donc monté dans le sommier 2, libre en rotation autour de l'axe vertical 14 de la chandelle 5 confondu avec l'axe vertical de l'assemblage.

La partie de l'assemblage 1 disposée au-dessus du pied 1a et constituant le corps 1b de cet assemblage présente une section transversale hexagonale telle que représentée sur la figure 2. Sur cette figure, on voit que les assemblages voisins 20a, 20b, 20c,..., constituant le réseau du coeur sont en contact par leurs faces latérales, chaque assemblage entouré de six assemblages identiques occupant une cellule prismatique à section hexagonale définie par les assemblages voisins. Lors de la mise en place des assemblages 1 pour constituer la première charge du coeur, les assemblages sont susceptibles de s'auto-orienter, chacun autour de son axe vertical 14, grâce à des surfaces de guidage et d'orientation 16 usinées à la partie inférieure du corps 1b de chacun des assemblages. Les surfaces de guidage et d'orientation 16 des assemblages voisins coopèrent pour réaliser une orientation relative convenable des assemblages les uns par rapport aux autres. Au moment de la constitution du premier coeur avec des faux assemblages, on détermine de façon précise la forme à donner aux surfaces de guidage et d'orientation 16 de chacun des assemblages. En particulier, l'orientation des assemblages doit assurer une mise en coïncidence parfaite des ouvertures 7 du pied 1a de chacun des assemblages avec les lumières 6 de la chandelle 5 correspondante.

Le corps 1b de l'assemblage 1 est solidaire à sa partie supérieure d'une tête 17 relativement massive dont la fonction est double. La tête 17 assure tout d'abord la suspension d'un ensemble de barreaux 18 en matériau absorbant les neutrons, assurant la protection neutronique des structures supérieures du réacteur. La tête 17 comporte également une partie interne 19 terminée par un épaulement qui permet la préhension de l'assemblage par le grappin de la machine de manutention des assemblages du réacteur. La tête 17 est fixée par sertissage ou par soudage sur le corps 1b de l'assemblage.

Lorsque le réacteur nucléaire est en fonctionnement, la partie de tête 17 des assemblages subit des contraintes d'origine thermique importantes dues aux conditions régnant dans cette zone du coeur. La tête massive 17 et sa liaison au corps 1b de l'assemblage sont donc d'une conception difficile.

Sur la figure 3, on a représenté une partie d'un coeur de réacteur nucléaire suivant l'invention dont la section transversale, au niveau du corps des assemblages, correspond à la représentation de la figure 2.

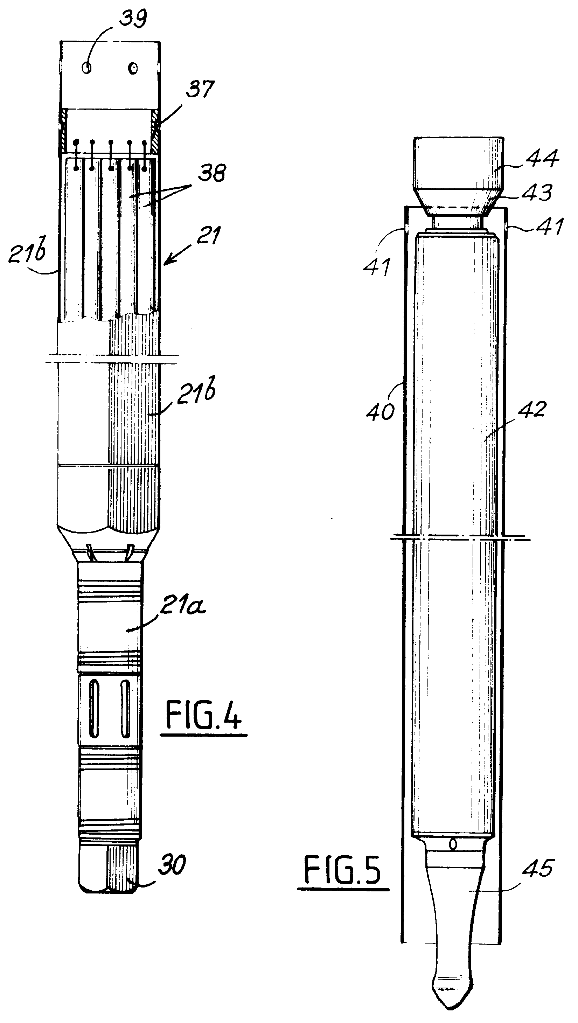

Un assemblage 21 d'un coeur suivant l'invention a été représenté dans sa position extraite du coeur et dans sa position de service dans le coeur, sur la figure 3. L'assemblage 21 a de plus été représenté à plus grande échelle et en coupe partielle sur la figure 4.

Le coeur suivant l'invention présente une structure générale analogue au coeur de réacteur suivant l'art antérieur représenté sur la figure 1. Il comporte un sommier 22 constitué d'une plaque supérieure 23 et d'une plaque inférieure 24 reliées par des entretoises tubulaires 25. Les entretoises 25 reçoivent les pieds 21a des assemblages qui sont percés d'ouvertures 27 venant en coïncidence avec des lumières 26 ménagées dans les chandelles correspondantes 25, pour le passage du sodium liquide dans l'assemblage 21. La partie inférieure 30 du pied 21a de l'assemblage 21 présente une forme prismatique à section hexagonale ayant pour axe l'axe 32 commun à la chandelle 25 et à l'assemblage 21 et l'alésage de la chandelle 25 comporte une partie correspondante 31 de forme prismatique ayant également pour axe l'axe 32. L'orientation de l'assemblage 21 par rapport au sommier 22 est donc assurée par les surfaces prismatiques mâles et femelles correspondantes 30 et 31, au moment de l'introduction du pied 21a de l'assemblage dans le sommier 22. Cette orientation qui correspond à une mise en coïncidence parfaite des ouvertures 27 et des lumières 26 est maintenue, lorsque l'assemblage est en position de service dans le coeur, comme représenté dans la partie de droite sur la figure 3, l'assemblage 21 étant bloqué en rotation autour de son axe, à l'intérieur de l'alésage de la chandelle 25.

La conception du sommier 22 et, en particulier la position et l'orientation des chandelles 25 les unes par rapport aux autres, est telle que les corps 21b des assemblages dont les pieds 21a sont bloqués en rotation dans les chandelles 25 du sommier 22 soient disposés suivant un réseau hexagonal dont la section est représentée sur la figure 2.

Il n'est alors plus nécessaire de prévoir des surfaces de guidage et d'orientation analogues aux surfaces 16 de l'assemblage 1 suivant l'art antérieur, à la partie inférieure du corps 21b de l'assemblage d'un coeur suivant l'invention.

On voit sur la figure 4, la partie supérieure du corps 21b de l'assemblage qui comporte une simple pièce tubulaire 37 à section hexagonale de support de barreaux 38 de la protection neutronique supérieure de l'assemblage, au lieu d'une pièce massive telle que la pièce 17 d'un assemblage suivant l'art antérieur représenté sur la figure 1. La pièce 37 est sertie ou soudée à l'intérieur de l'enveloppe du corps 21b de l'assemblage. Cette enveloppe du corps 21b est prolongée au-dessus de la pièce 37 et comporte, dans cette zone supérieure, des ouvertures traversantes 39 permettant l'engagement des doigts du grappin de manutention de l'assemblage.

Sur la figure 5, on voit l'enveloppe 40 du corps d'un assemblage de commande du réacteur nucléaire. Cette enveloppe 40 de forme hexagonale est identique à l'enveloppe du corps 21b d'un assemblage combustible tel que représenté sur les figures 3 et 4. La partie de pied de l'assemblage de commande qui n'a pas été représentée est identique à la partie de pied 21a d'un assemblage combustible tel que représenté sur les figures 3 et 4. L'enveloppe 40 de l'assemblage de commande comporte des ouvertures traversantes 41 dans sa partie supérieure, pour l'introduction des doigts d'un grappin de manutention, au moment de la mise en position dans le coeur de la partie fixe de guidage 40 de l'assemblage. La partie fixe 40 est destinée à recevoir un ensemble absorbant 42 qui peut être déplacé verticalement dans le coeur grâce à un mécanisme comportant une tige de commande de grande longueur qui peut être reliée à la tête 43 de l'ensemble absorbant 42, par l'intermédiaire d'un électro-aimant 44.

L'assemblage représenté sur la figure 5 est un assemblage de commande permettant l'arrêt d'urgence du réacteur en cas d'incident.

Plusieurs assemblages identiques à l'assemblage de commande représenté sur la figure 5 sont placés dans des positions bien déterminées dans le coeur. Lorsque le réacteur est en fonctionnement normal, les ensembles absorbants 42 de ces assemblages sont en position haute comme représenté sur la figure 5 et maintenus dans cette position par les électro-aimants 44. Dans le cas d'un incident, le courant d'alimentation des électro-aimants 44 est coupé et les ensembles 42 retombent en position basse d'insertion maximum dans le coeur du réacteur. La partie inférieure 45 de l'ensemble absorbant 42 constitue avec la partie de pied de l'enveloppe 40 de l'assemblage non représentée un dash-pot qui permet d'absorber l'énergie cinétique acquise par l'ensemble absorbant 42 pendant sa chute.

Lorsque les ensembles absorbants 42 sont en position d'insertion maximum dans le coeur, la puissance neutronique du coeur est réduite à une valeur très faible.

Les assemblages de commande selon l'art antérieur comportent, tout comme les assemblages combustibles, une pièce de tête massive permettant la manutention de l'assemblage pour sa mise en place ou pour son retrait du coeur. Cette pièce massive reliée à la partie supérieure de l'enveloppe de l'assemblage introduit une réduction de la section de passage à la partie supérieure de l'assemblage. La section de la masselotte de tête 43 de l'ensemble absorbant 42 et la hauteur de remontée maximum de cet assemblage 42 sont alors réduites par rapport à celles qui sont possibles avec un assemblage selon l'invention tel que représenté sur la figure 5.

Les assemblages de commande peuvent être du type représenté sur la figure 5 et servir pour l'arrêt d'urgence du réacteur ou se présenter sous la forme d'un ensemble absorbant relié de façon permanente, pendant la marche du réacteur, à une tige de commande dont le déplacement assure une plus ou moins grande insertion de l'ensemble absorbant dans le coeur, pour assurer la commande du flux neutronique et de la puissance du réacteur.

Dans ce cas, comme dans le cas des assemblages de commande d'arrêt d'urgence, la partie supérieure de l'enveloppe de la partie fixe de l'assemblage présente des ouvertures traversantes pour assurer la manutention de l'assemblage et n'est pas reliée à une pièce massive de préhension.

La section de passage de l'ensemble absorbant n'est donc pas réduite et correspond à la section totale d'ouverture de l'enveloppe 40 à sa partie supérieure. Il est possible dans ce cas, comme dans le cas des barres de commande d'arrêt d'urgence, de remonter l'ensemble absorbant à une hauteur supérieure à l'intérieur de la structure fixe de l'assemblage de commande. Dans les deux cas, il est possible de remonter l'ensemble absorbant à une hauteur supérieure à celle des têtes d'assemblage dans le coeur. On obtient ainsi une plus grande liberté pour la conception du coeur du réacteur nucléaire. L'ensemble des assemblages de commande, comme l'ensemble des assemblages combustibles, comporte une partie de pied faisant partie de son enveloppe fixe, engagée dans le sommier du réacteur par une surface prismatique coopérant avec une surface prismatique correspondante du sommier. On obtient ainsi une orientation et un maintien des assemblages de façon à réaliser, au moment du chargement du coeur, une parfaite mise en coïncidence des ouvertures des pieds d'assemblages avec les lumières des chandelles du sommier.

Les assemblages combustibles tels que représentés sur les figures 3 et 4 peuvent être du type fissile ou du type fertile, suivant la composition des crayons combustibles qu'ils renferment.

Il apparaît donc que le coeur du réacteur nucléaire suivant l'invention peut être constitué, au moment du premier chargement du réacteur, par une simple opération de mise en place des assemblages combustibles, chacun dans une position à l'intérieur du coeur, parfaitement déterminée par la position de la chandelle correspondante. Chacun des assemblages est pris en charge par le grappin dont les doigts sont engagés dans les ouvertures traversant la partie supérieure du corps de l'assemblage. Il est à remarquer que la position de ces trous dans le corps de l'assemblage permet de le placer dans une position parfaitement déterminée, sous le dispositif de manutention, en ce qui concerne son orientation autour de son axe vertical. Cette orientation permet une introduction du pied de l'assemblage dans la chandelle de façon que les surfaces prismatiques correspondantes de l'assemblage et de la chandelle soient en concordance. Lorsqu'un assemblage repose dans la chandelle correspondante du sommier du réacteur, son orientation autour de son axe vertical est parfaitement déterminée et fixée à demeure, si bien que les assemblages voisins dont l'orientation est de même définie et fixée au moment de leur introduction dans les chandelles correspondantes viennent se placer automatiquement de façon jointive contre les faces périphériques de l'assemblage. Les parties d'orientation correspondantes de l'assemblage et de la chandelle permettent également de réaliser une mise en coïncidence parfaite des ouvertures du pied de l'assemblage et des lumières de la chandelle.

L'ensemble des assemblages du coeur, qu'ils soient combustibles, fissiles ou fertiles, de commande, ou d'autres types, comportent des moyens permettant leur orientation par rapport au sommier et par là même, leur orientation relative.

Il n'est donc plus nécessaire de prévoir des usinages spéciaux et complexes sur la surface du corps des assemblages ou des pièces de centrage et d'orientation rapportées, si bien que la conception et la construction des assemblages sont considérablement simplifiées.

Le procédé de chargement du premier coeur du réacteur est lui-même considérablement simplifié puisqu'il n'est plus nécessaire de réaliser un coeur sous air, avec de faux assemblages, préalablement au chargement effectif du coeur. Le chargement peut être effectué directement dans le sodium liquide, avec les vrais assemblages. En outre, l'immobilisation angulaire des assemblages permet d'éviter toute déformation ou évolution du coeur dans le temps, sous l'effet des sollicitations subies en service.

La suppression des patins d'auto-orientation des assemblages les uns par rapport aux autres permet de concevoir de façon plus simple la liaison entre le pied et l'enveloppe prismatique à section hexagonale du corps de l'assemblage. On peut réaliser cette liaison par emboutissage au lieu d'un soudage ou obtenir ainsi un gain sur l'encombrement axial de l'assemblage qui peut être mis à profit pour augmenter la hauteur du combustible dans chacun des assemblages et donc dans la totalité du coeur.

De la même façon, le gain sur l'encombrement axial du corps de l'assemblage venant de la suppression de la tête de préhension permet d'augmenter la hauteur de combustible dans chacun des assemblages et donc dans l'ensemble du coeur. La suppression de la tête massive de préhension permet également de simplifier la conception de l'assemblage en ce qui concerne le calcul de son dimensionnement, sa réalisation et le contrôle de la liaison entre l'enveloppe hexagonale du corps et la tête massive.

De manière générale, les simplifications apportées permettent de réduire les quantités et donc le coût des matières premières utilisées et de limiter la production des déchets qui sont envoyés au stockage et au retraitement, lors du déchargement du coeur.

L'invention ne se limite pas aux modes de réalisation qui ont été décrits.

C'est ainsi qu'on peut imaginer des moyens d'orientation sur le pied de l'assemblage et dans la chandelle du sommier correspondante, d'une forme différente de la forme prismatique à section hexagonale. On peut imaginer l'utilisation de formes prismatiques à section quelconque, de parties mâles et de parties femelles correspondantes de forme quelconque non symétriques de révolution par rapport à l'axe de l'assemblage et de la chandelle, des pions et des ouvertures de formes correspondantes ou encore des parties en saillies et des encoches pouvant coopérer pour assurer l'orientation et l'immobilisation du pied de l'assemblage par rapport au sommier.

Pour l'accrochage et l'orientation de l'assemblage par le grappin de manutention, on peut imaginer à la place des trous débouchants toute autre forme obtenue par emboutissage ou usinage, bossages ou creux directement obtenus sur l'enveloppe hexagonale.

Les matériaux et les traitements de surface des parties mâles et femelles des moyens d'orientation en contact sont choisis pour éviter tout arrachement de matière et toute usure excessive, aussi bien lorsque le réacteur est en fonctionnement, que lors des opérations de déchargement ou de chargement du réacteur.

L'invention s'applique non seulement aux réacteurs nucléaires à neutrons rapides, mais encore à tout réacteur nucléaire comportant un coeur constitué par des assemblages combustibles verticaux engagés par leur pied dans un support dans lequel est envoyé le fluide de refroidissement du réacteur.

## Revendications

1. Coeur d'un réacteur nucléaire constitué d'assemblages amovibles disposés verticalement et d'un support ou sommier (22) recevant la partie inférieure ou pied (21a) des assemblages (21) à l'intérieur de fourreaux (25) à axe vertical ou chandelles percées d'ouvertures (26) de passage du fluide de refroidissement du réacteur, placées en coïncidence avec des ouvertures (27) ménagées dans le pied (21a) de l'assemblage caractérisé par le fait que chacune des chandelles (25) comporte sur son pied au moins un moyen d'orientation (31) de l'assemblage (21) autour de l'axe (32) de la chandelle (25) et que chacun des assemblages (21) comporte :

— un corps vertical ayant une partie supérieure constituée par une enveloppe tubulaire ouverte à son extrémité supérieure dont la paroi latérale présente des ouvertures (39, 41), placées de manière que le corps vertical de l'assemblage soit disposé dans une orientation parfaitement déterminée autour de son axe vertical en-dessous d'un dispositif de manutention ayant des doigts de préhension engagés dans lesdites ouvertures (39, 41),

— et une partie inférieure ayant au moins un moyen d'orientation (30) sur son pied (21a), destiné à coopérer avec le moyen correspondant (31) de la chandelle (25) dans laquelle le pied (21a) de l'assemblage est introduit, dans une orientation déterminée par le moyen de manutention.

2. Coeur d'un réacteur nucléaire suivant la revendication 1, caractérisé par le fait que le moyen d'orientation de l'assemblage (21) dans la chandelle (25) est constitué par un logement (31) prismatique ménagé dans l'alésage de la chandelle (25) et que le moyen correspondant d'orientation de l'assemblage (21) est constitué par une surface prismatique mâle de forme correspondante (30) ménagée sur le pied de l'assemblage et ayant pour axe l'axe de cet assemblage (21).

3. Coeur de réacteur nucléaire suivant l'une quelconque des revendications 1 et 2, caractérisé par le fait que les assemblages combustibles (21) du coeur comportent une pièce annulaire (37) solidaire, à sa partie inférieure, de l'enveloppe tubulaire du corps (21b) de l'assemblage, située en-dessous des ouvertures (39, 41) et portant des barreaux (38) de matériau absorbant les neutrons constituant la protection neutronique supérieure de l'assemblage (21).

4. Coeur de réacteur nucléaire suivant l'une quelconque des revendications 1 à 3, caractérisé par le fait que les assemblages (21) du coeur comportent un corps (21b) de forme prismatique dont la section transversale est hexagonale.

5. Procédé de chargement d'un coeur de réacteur nucléaire suivant l'une quelconque des revendications 1 à 4, dans le cas où le réacteur nucléaire est un réacteur à neutrons rapides refroidi par du métal liquide contenu dans une cuve, caractérisé par le fait:
— qu'on remplit la cuve de métal liquide,
— qu'on introduit successivement chacun des assemblages (21) du coeur dans la cuve remplie de métal liquide, grâce à un moyen de manutention,
— qu'on place et qu'on oriente chacun des assemblages combustibles (21) au-dessus de la chandelle correspondante (25) du sommier (22) du réacteur,
— et qu'on introduit le pied (21a) de l'assemblage (21) dans la chandelle (25) correspondante, l'orientation de l'assemblage (21) par rapport à la chandelle (25) et au sommier (22) étant assurée par les moyens d'orientation correspondants (30, 31).

**Patentansprüche**

1. Kern eines Kernreaktors, gebildet aus vertikal angeordneten entfernbaren Brennelementkassetten und einem Träger oder Balken (22), der den unteren Bereich oder Fuß (21a) der Anordnungen oder Installationen (21) im Inneren von Futteralen (25) mit vertikaler Achse oder mit Durchtrittsöffnungen (26) der Kühlflüssigkeit des Reaktors durchsetzten Stielen, die in Übereinstimmung mit Öffnungen (27) angeordnet sind, die in dem Fuß (21a) der Kassette ausgebildet sind, **dadurch gekennzeichnet,** daß ein jeder der Stiele (25) an seinem Fuß wenigstens eine Ausrichteinrichtung (31) der Kassette (21) um die Achse (32) des Stiels (25) aufweist, und daß jede der Kassetten (21) aufweist :
— einen vertikalen Körper, der einen oberen Bereich aufweist, der durch eine rohrförmige Hülle gebildet wird, die an ihrem oberen Ende offen ist, deren Seitenwand Öffnungen (39, 41) aufweist, die derart angeordnet sind, daß der vertikale Körper der Kassette in einer vollkommen vorbestimmten Ausrichtung um seine vertikale Achse unterhalb einer Handhabungsvorrichtung angeordnet ist, die Greiffinger aufweist, die in die Öffnungen (39, 41) eingreifen, und
— einen unteren Bereich, der wenigstens eine Ausrichteinrichtung (30) auf seinem Fuß (21a) aufweist, die dazu bestimmt ist, mit der entsprechenden Einrichtung (31) des Stiels (25) zusammenzuwirken, in dem der Fuß (21a) der Kassette eingeführt ist in eine vorbestimmte Ausrichtung durch die Handhabungsvorrichtung.

2. Kern eines Kernreaktors nach Anspruch 1, **dadurch gekennzeichnet,** daß die Ausrichteinrichtung der Kassette (21) in dem Stiel (25) durch eine prismatische Aufnahme (31) gebildet wird, die in der Ausnehmung des Stiels (25) ausgebildet ist, und daß die entsprechende Ausrichteinrichtung der Kassette (21) durch eine männliche prismatische Oberfläche von entsprechender Form (30) gebildet wird, die auf dem Fuß der Kassette ausgebildet ist und als Achse die Achse dieser Kassette (21) hat.

3. Kern eines Kernreaktors nach Anspruch 1 oder 2, **dadurch gekennzeichnet,** daß die brennbaren Kassetten (21) des Kerns ein rohrförmiges Teil (37) aufweisen, das an seinem unteren Bereich mit der rohrförmigen Hülle des Körpers (21b) der Kassette verbunden ist, angeordnet unterhalb der Öffnungen (39, 41) und Stäbe (38) aus die Neutronen absorbierendem Material tragend, die den oberen Neutronenschutz der Kassette (21) bilden.

4. Kern eines Kernreaktors nach einem der Ansprüche 1 bis 3, **dadurch gekennzeichnet,** daß die Kassetten (21) des Kerns einen Körper (21b) von prismatischer Form aufweisen, dessen Querschnitt hexagonal ist.

5. Verfahren zum Beschicken eines Kerns eines Kernreaktors nach einem der Ansprüche 1 bis 4, in dem Fall, wo der Kernreaktor ein Reaktor mit schnellen Neutronen ist, der durch ein flüssiges Metall gekühlt wird, das in einem Behälter enthalten ist, **dadurch gekennzeichnet,** daß :
— der Behälter mit Flüssigmetall gefüllt wird,
— aufeinanderfolgend jede der Kassetten (21) des Kerns in den mit Flüssigmetall gefüllten Behälter dank einer Handhabungsvorrichtung eingeführt wird,

— eine jede der brennbaren Kassetten (21) oberhalb des entsprechenden Stieles (25) des Balkens (22) des Reaktors gesetzt und ausgerichtet wird, und

— der Fuß (21a) der Kassette (21) in dem entsprechenden Stiel (25) eingeführt wird, wobei die Ausrichtung der Kassette (21) bezüglich des Stiels (25) und bezüglich des Balkens (22) durch die entsprechenden Ausrichteinrichtungen (30, 31) sichergestellt wird.

## Claims

1. A core of a nuclear reactor comprising removable assemblies disposed vertically and a support or bolster (22) which receives the lower part or foot (21a) of the assemblies (21) inside vertically extending sleeves (25) or pillars provided with openings (26) for the passage of a coolant fluid for the reactor, the openings being located so as to register with openings (27) provided in the foot (21a) of the assembly, characterised in that each of the pillars (25) comprises on its base at least one means (31) for orienting the assembly (21) about the axis (32) of the pillar (25) and each of the assemblies (21) comprises :

    — a vertical body having an upper part comprising a tubular casing open at its upper end, the side wall of which has openings (39, 41) arranged so that the vertical body of the assembly is located in a completely determined orientation about its vertical axis below a handling device having gripper fingers which engage in said openings (39, 41),

    — and a lower part having at least one means (30) for orienting on its foot (21a), adapted to cooperate with the corresponding means (31) on the pillar (25) into which the foot (21a) of the assembly is introduced, in an orientation determined by the handling device.

2. A core of a nuclear reactor according to claim 1, characterised in that the means for orienting the assembly (21) in the pillar (25) comprises a prismatic recess (31) formed in the bore of the pillar (25) and the corresponding means for orienting the assembly (21) consist of a correspondingly shaped male prismatic surface (30) formed on the foot of the assembly and having the same axis as this assembly (21).

3. A core of a nuclear reactor according to claim 1 or 2, characterised in that the fuel assemblies (21) of the core comprise an annular component (37) which is integral, at its lower part, with the tubular casing of the body (21b) of the assembly, located below the openings (39, 41) and carrying bars (38) of neutron-absorbing material which constitute the upper neutron protection of the assembly (21).

4. A core of a nuclear reactor according to any of claims 1 to 3, characterised in that the assemblies (21) of the core have a prismatic body (21b) which is hexagonal in cross-section.

5. Process for charging a nuclear reactor core according to any one of claims 1 to 4, if the nuclear reactor is a fast neutron reactor cooled by liquid metal contained in a tank, characterised in that :

    — the tank is filled with liquid metal,

    — each of the assemblies (21) of the core is introduced, in succession, into the tank filled with liquid metal, using handling means,

    — each of the fuel assemblies (21) is positioned and oriented above the corresponding pillar (25) of the bolster (22) of the reactor,

    — and the foot (21a) of the assembly (21) is introduced into the corresponding pillar (25), the orientation of the assembly (21) relative to the pillar (25) and bolster (22) being effected by the corresponding orienting means (30, 31).

FIG.1

FIG.2

FIG.3

FIG.4

FIG.5